# EUROPÄISCHE PATENTSCHRIFT

(11) **EP 0 796 390 B1**
(45) Veröffentlichungstag und Bekanntmachung des Hinweises auf die Patenterteilung: **11.12.2002**
(21) Anmeldenummer: 96923831.0
(22) Anmeldetag: 10.07.1996
(51) Int. Cl.: F01N 7/00

(54) **VERFAHREN UND VORRICHTUNG ZUR ÜBERWACHUNG DER FUNKTIONSWEISE EINES KATALYSATORS**
PROCESS AND DEVICE FOR MONITORING THE OPERATION OF A CATALYST
PROCEDE ET DISPOSITIF POUR LE CONTROLE DU FONCTIONNEMENT D'UN CATALYSEUR

(30) Priorität: 11.10.1995 DE 19537788
(43) Veröffentlichungstag der Anmeldung: 24.09.1997
(73) Patentinhaber: ROBERT BOSCH GMBH, 70442 Stuttgart (DE)
(72) Erfinder: SCHENK, Rene, D-71732 Tamm (DE)
(86) Internationale Anmeldenummer: DE9601257
(87) Internationale Veröffentlichungsnummer: WO97013964

(56) Entgegenhaltungen:
- US-A- 4 175 427
- US-A- 5 179 833
- US-A- 5 444 974
- US-A- 5 452 576
- PATENT ABSTRACTS OF JAPAN vol. 016, no. 398 (P-1408), 24.August 1992 & JP,A,04 131762 (MITSUBISHI MOTORS CORP;OTHERS: 01), 6.Mai 1992,

## Beschreibung

### Stand der Technik

Die Erfindung betrifft ein Verfahren und eine Vorrichtung zur Überwachung der Funktionsweise eines Katalysators, gemäß den Oberbegriffen der unabhängigen Ansprüche.

Aus der US 5 452 576 sind ein Verfahren und eine Vorrichtung zur Überwachung der Funktionsweise eines Katalysators bekannt. Zur Überwachung des Katalysators bzw. der übrigen Systemkomponenten wird ein Signal verwendet, das den Anteil von Kohlenwasserstoffen im Abgas anzeigt. Übersteigt die Kohlenwasserstoffkonzentration einen Schwellwert, so wird der Katalysator als defekt erkannt.

Bei der Einrichtung gemäß der US 5 452 576 ist vorgesehen, dass die Abgasmenge gemittelt und dieser Mittelwert mit einem Schwellwert verglichen wird. Dies ist wird dadurch realisiert, dass in bestimmten Betriebszuständen, die durch einen Testzyklus definiert sind, die Schadstoffmengen erfasst und auf summiert werden. Übersteigt dieser aufsummierte Wert einen Schwellwert, so wird von einem Defekt des Systems ausgegangen.

Aus der US-A-5 182 907 ist ein Verfahren und eine Vorrichtung zur'Überwachung eines Katalysators bekannt. Vor und nach dem Katalysator ist jeweils ein Sensor angeordnet, der den Anteil an Kohlenwasserstoffen im Abgas erfaßt. Ausgehend von dem Vergleich zwischen dem Kohlenwasserstoffgehalt vor und nach dem Katalysator wird ein Defekt des Katalysators erkannt.

Die Abgase von selbstzündenden Kraftmaschinen neigen aufgrund der Tatsache, daß sie mit einem hohen Luftüberschuß betrieben werden, zu einer hohen NOx-Emission. Diese tritt verstärkt bei Brennkraftmaschinen mit Direkteinspritzung in den Brennraum auf. Zur Senkung dieser Emission kann ein Reduktionskatalysator verwendet werden. Zur Reduktion des NOx wird vor dem Katalysator zusätzlich Kraftstoff eindosiert, der im Katalysator umgesetzt wird.

Desweiteren ist vorgesehen, daß bei Dieselmotoren durch einen Oxidationskatalysator das Abgas nachbehandelt wird. Dadurch lassen sich die Kohlenwasserstoffemissionen (HC-Emissionen) deutlich senken.

Eine solche Vorgehensweise ist beispielsweise in der DE-OS 4441261 beschrieben.

In den USA wird eine sogenannte On-Board-Diagnose (OBD) gefordert. Dies bedeutet, daß bestimmte Komponenten ständig überwacht und Fehler, insbesondere Verschlechterungen der Abgasemission des Motors, dem Fahrer angezeigt werden. Für den NOx-Katalysator wird aufgrund der zudosierten Kraftstoffmenge eine Überwachung gefordert.

### Aufgabe der Erfindung

Der Erfindung liegt die Aufgabe zugrunde, ein Diagnoseverfahren und eine Diagnosevorrichtung bereitzustellen, die mit geringem Aufwand sowohl bei dem Oxidationskatalysator als auch bei dem NOx-Katalysator ein Nachlassen der Wirkung diagnostizieren kann.

### Vorteile der Erfindung

Mit der erfindungsgemäßen Vorgehensweise ist es möglich, ein Nachlassen der Wirkungsweise der Katalysatoren im laufenden Betrieb zu erkennen.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsform erläutert. Es zeigen Figur 1 eine Gesamtdarstellung von Brennkraftmaschine und Katalysator, Figur 2 ein Blockdiagramm und Figur 3 ein Flußdiagramm einer ersten Ausführungsform, Figur 4 ein Blockdiagramm und Figur 5 ein Flußdiagramm einer weiteren, nicht erfindungsgemäßen Ausführungsform des Diagnoseverfahrens.

### Beschreibung der Ausführungsbeispiele

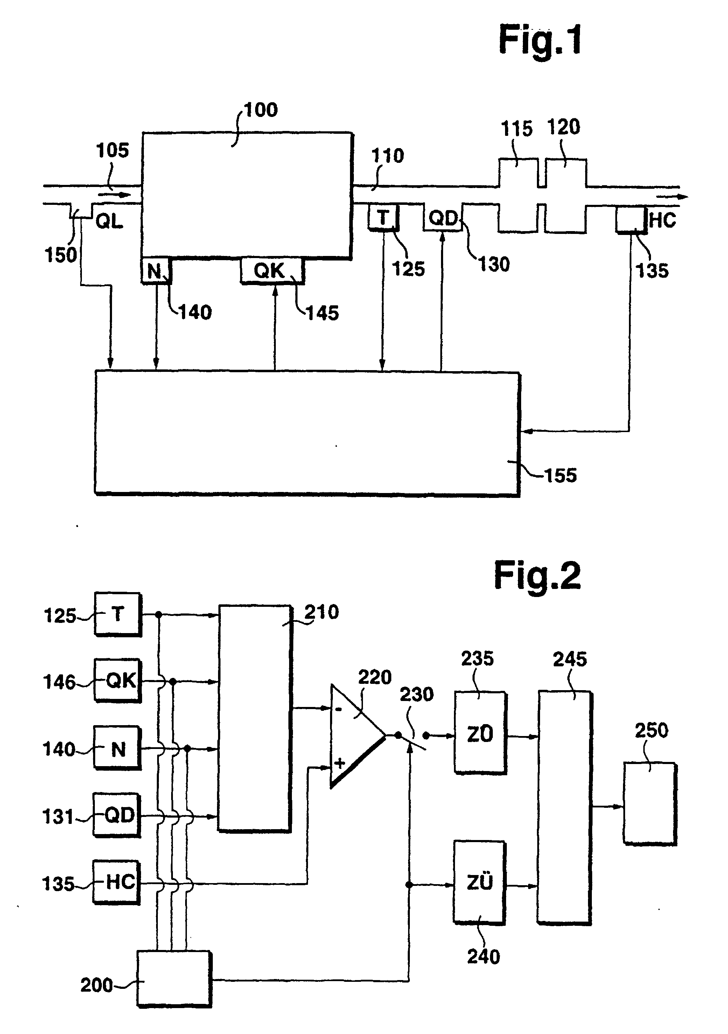

In Figur 1 ist schematisch eine Brennkraftmaschine 100 dargestellt. Hierbei handelt es sich vorzugsweise um eine selbstzündende Brennkraftmaschine. Über eine Ansaugleitung 105 wird der Brennkraftmaschine Frischluft zugeführt, über eine Abgasleitung 110 werden die Abgase der Brennkraftmaschine abgeleitet. In der Abgasleitung ist ein Reduktions-Katalysator 115 sowie ein Oxidations-Katalysator 120 angeordnet. Besonders vorteilhaft ist es wenn die beiden Katalysatoren eine bauliche Einheit bilden.

Ein Temperatursensor 125 erfaßt die Abgastemperatur T. Mittels einer Dosiereinrichtung 130 kann eine betriebskenngrößenabhängige Kraftstoffmenge QD dem Abgas zugeführt werden. Desweiteren ist ein Kohlenwasserstoff-Sensor 135 (HC-Sensor) vorgesehen, der den Anteil von unverbrannten Kohlenwasserstoffen (HC) im Abgas erfaßt. Dieser Sensor 135 liefert ein Signal, das dem Anteil von Kohlenwasserstoffen entspricht.

Ein Drehzahlsensors **140** erfaßt die Drehzahl N der Brennkraftmaschine. Eine Kraftstoffzumeßeinrichtung 145 mißt der Brennkraftmaschine eine vorgegebene Kraftstoffmenge QK zu.

Ein Sensor 150 erfaßt die angesaugte Luftmenge QL. Eine Steuereinheit 155 verarbeitet die von den Sensoren 125, 135, 140 und 150 bereitgestellten Signale. Die Steuereinheit 155 wiederum beaufschlagt die Kraftstoffzumeßeinheit 145 sowie die Dosiereinrichtung 130 mit Ansteuersignalen.

Diese Einrichtung arbeitet nun wie folgt. Abhängig von verschiedenen Betriebskenngrößen wie beispielsweise der Drehzahl N und dem Fahrerwunsch berechnet die Steuereinheit 155 eine einzuspritzende Kraftstoffmenge QK, mit der die Kraftstoffzumeßeinheit 145 beaufschlagt wird. Diese mißt der Brennkraftmaschine eine entsprechende Kraftstoffmenge zu. Dieser Kraftstoff wird in der Brennkraftmaschine zusammen mit der zugeführten Luftmenge QL verbrannt. Die dabei entstehenden Abgase enthalten zum einen Stickoxide NOx sowie unverbrannte Kohlenwasserstoffe HC.

Diese Bestandteile werden in den beiden Katalysatoren 115 und 120 zu unschädlichen Verbindungen wie Co₂ und H₂O umgesetzt. Zur Reduktion des NOx ist es erforderlich, daß eine bestimmte Menge von Kohlenwasserstoffen HC dem Abgas zugesetzt wird. Dies kann beispielsweise mittels der Dosiereinrichtung 130 erfolgen. Hierzu berechnet die Steuereinheit die erforderliche Dosiermenge QD und steuert die Dosiereinrichtung 130 entsprechend an.

Arbeitet der Oxidationskatalysator 120 unzureichend, so tritt ein erhöhter Anteil von unverbranntem Kohlenwasserstoffen im Abgas nach dem Katalysator auf. Entsprechend wird bei einem defekten Reduktionskatalysator 115 die zudosierte Kraftstoffmenge nicht mehr umgesetzt, was ebenfalls zu einer erhöhten Kohlenwasserstoffemission führt. Dieser Kohlenwasserstoff kann mittels des Kohlenwasserstoffsensors 135 im Abgas nachgewiesen werden.

Die Überwachung der Katalysatoren mittels des HC-Sensors 135 wird dadurch erschwert, daß bei bestimmten Betriebszuständen erhöhte Kohlenwasserstoffemissionen im Abgas auftreten, obwohl die Katalysatoren voll funktionsfähig sind.

Diese kurzfristigen Kohlenwasserstoffemissionen dürfen nicht zu einer Fehleranzeige führen. Desweiteren darf die Überwachung nur dann stattfinden, wenn der Katalysator aktiv ist.

Erfindungsgemäß wird nun wie folgt vorgegangen:

Es wird erkannt, daß der Katalysator intakt ist. Dies hat sich als vorteilhaft gegenüber der Methode, daß der Katalysator als defekt erkannt wird, herausgestellt. Desweiteren wird eine integrale Messung durchgeführt, da hiermit der Einfluß von kurzzeitigen Unregelmäßigkeiten reduziert wird.

Eine Ausführungsform der Überwachungseinrichtung ist in Figur 2 dargestellt. Elemente die bereits in Figur 1 beschrieben wurden, sind mit entsprechenden Bezugszeichen gekennzeichnet. Einer Arbeitsbereichserkennung 200 werden die Ausgangssignale des Temperatursensors 125, des Drehzahlsensors 140 und der Mengenvorgabe 146 zugeführt.

Die Mengenvorgabe 146 stellt das Signal QK, das die einzuspritzende Kraftstoffmenge QK bestimmt und mit dem das Element 145 angesteuert wird, bereit. Alternativ können auch andere Mengensignale, die in der Steuereinheit 155 vorliegen verwendet werden. Diese Signale sowie das Ausgangssignal QD der Dosiermengenvorgabe 131 werden einem Kennfeld 210 zugeleitet. Das Ausgangssignal des Kennfeldes 210 gelangt an den negativen Eingang eines Vergleichers 220. An dessen positivem Eingang liegt das Ausgangssignal des Kohlenwasserstoffsensors 135 an.

Das Ausgangssignal des Vergleichers 220 steht über ein Schaltmittel 230 mit einem Zähler 235 in Verbindung. Die Arbeitsbereichserkennung 200 beaufschlagt das Schaltmittel 230 und einen Zähler 240 mit einem Signal. Die Ausgangssignale der Zähler 235 und 240 werden einer Verarbeitung 245 zugeleitet, die wiederum eine Fehleranzeige 250 beaufschlagt. Bei der Fehleranzeige 250 handelt es sich beispielsweise um eine Warnlampe, die dem Fahrer anzeigt, daß der Katalysator defekt ist. Alternativ kann es sich hierbei auch um ein Speicherelement handeln, in dem der Fehler eingespeichert und zu einem späteren Zeitpunkt beispielsweise bei einem Werkstattaufenthalt ausgelesen wird.

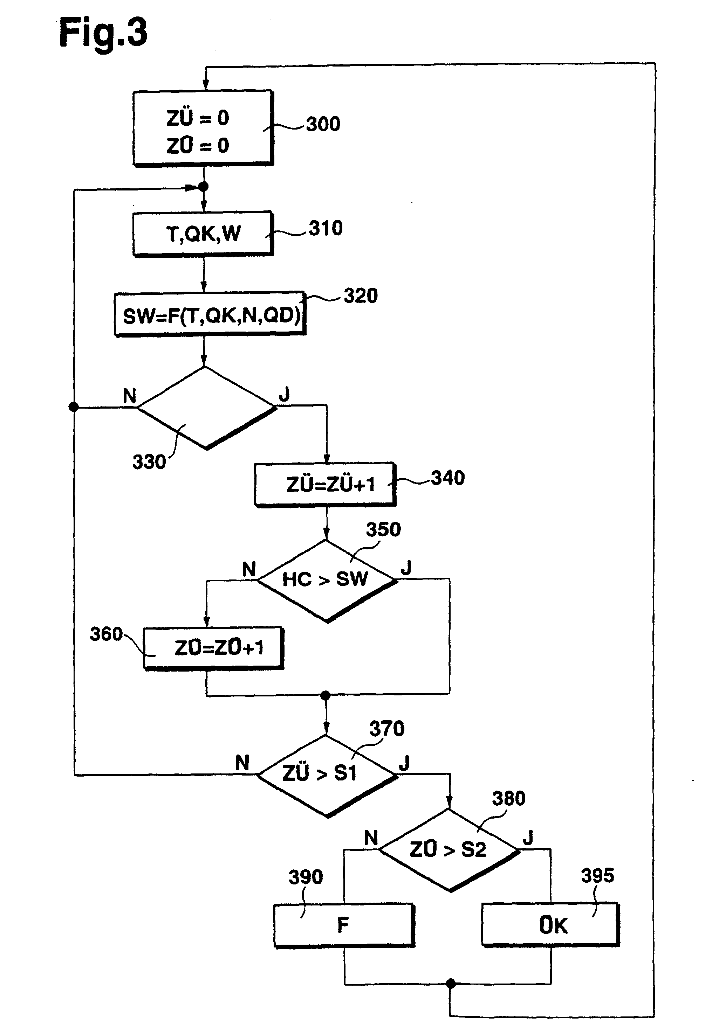

Die Funktionsweise dieser Vorrichtung wird anhand des Flußdiagramms gemäß Figur 3 beschrieben. In einem ersten Schritt 300 werden die Zählerstände ZÜ des Zählers 240 und ZO des Zählers 235 auf 0 gesetzt. Im anschließenden Schritt 310 werden die verschiedenen Betriebsparameter wie die Abgastemperatur T, die einzuspritzenden Kraftstoffmenge QK und die Drehzahl N erfaßt.

Im Schritt 320 wird aus dem Kennfeld 210 der Schwellwert SW ausgelesen. In dem Kennfeld 210 ist der Schwellwert abhängig von wenigstens einer der Größen Abgastemperatur T, einzuspritzender Kraftstoff QK, Drehzahl N und/oder der Dosiermenge QD abgelegt.

Ausgehend von der Abgastemperatur, der einzuspritzenden Kraftstoffmenge QK und der Drehzahl überprüft die Arbeitsbereichserkennung 200 im Schritt 330 ob ein Betriebsbereich vorliegt, in dem eine Überwachung des Katalysators möglich ist. Wird kein solcher Betriebszustand erkannt, wird mit Programmschritt 310 fortgesetzt. Wird ein solcher Betriebszustand erkannt, indem eine Überwachung sinnvoll möglich ist, wird im Schritt 340 der Zählerstand ZÜ des Zählers 240 um eins erhöht. Der Zählerstand entspricht der Zeitdauer innerhalb der eine Überwachung möglich ist.

Eine Überwachung ist möglich, wenn die Temperatur T eine Mindesttemperatur überschreitet. Desweiteren muß die eingespritzte Kraftstoffmenge QK und oder die Dosiermenge QD einen Mindestwert überschreiten.

Anschließend überprüft der Vergleicher 220 im Schritt 350, ob das Ausgangssignal HC des Kohlenwasserstoffsensors 135 größer als der Schwellwert SW ist. Ist dies nicht der Fall, so wird in Schritt 360 der Zählerstand ZO des Zählers 235 um eins erhöht. Der Zählerstand ZO entspricht der Zeitdauer innerhalb der der Katalysator als intakt erkannt wird.

Ist das Signal HC größer als der Schwellwert, bzw. anschließend an Schritt 360, überprüft die Abfrage 370, ob der Zählerstand ZÜ des Zählers 240 größer als ein Schwellwert S1 ist. Ist dies nicht der Fall, so folgt erneut der Schritt 310.

Ist der Zählerstand ZÜ größer als der Schwellwert S1, so überprüft eine Abfrage 380 ob der Zählerstand Z0 größer als ein zweiter Schwellwert S2 ist. Ist dies nicht der Fall, so wird in Schritt 390 auf Fehler erkannt, ist der Zählerstand größer als oder gleich wie der Schwellwert S2, so wird in Schritt 395 erkannt, daß kein Fehler vorliegt. Anschließend endet das Programm und wird erst nach dem nächsten Motorstart erneut initialisiert. Alternativ kann auch vorgesehen sein, daß das Programm erneut mit Schritt 300 beginnt.

Der Zeitzähler 240 zählt die Zeit, während der eine Überwachung sinnvoll möglich ist. Ferner wird der aktuelle Kohlenwasserstoffwert des Sensors 135 mit einem Grenzwert SW verglichen. Solange der Wert des Sensors kleiner als der Grenzwert ist, und sich der Katalysator im Überwachungsbereich befindet, wird in einem zweiten Zähler 235 die Zeit gezählt. Diese Zeit entspricht der Zeit, in welcher der Katalysator ordnungsgemäß arbeitet. Die Verarbeitungslogik 245 vergleicht den Überwachungszeitzähler 240 mit einem Grenzwert. Wird dieser überschritten, das heißt das Ende der Meßzeit ist erreicht, so wird auch der Zähler 235 ausgelesen. Liegt dessen Wert über einem Mindestwert, so ist der Katalysator in Ordnung.

Bei einem vereinfachten Ausführungsbeispiel kann auch vorgesehen sein, daß ein fester Schwellwert SW verwendet wird. Zusätzlich können auch noch andere Betriebskenngrößen wie die Luftmasse oder der Spritzbeginn, die ebenfalls in der Steuereinheit 155 vorliegen, zur Bildung des Schwellwerts SW verwendet werden.

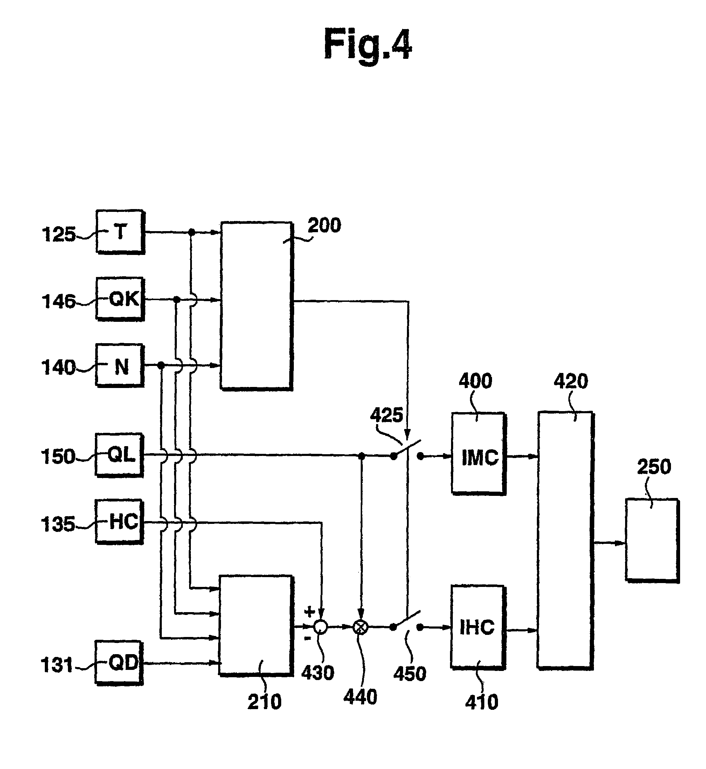

In Figur 4 ist eine weitere, nicht erfindungsgemäße Vorgehensweise mittels einer mengenorientierten Überwachung dargestellt. Bereits beschriebene Elemente sind mit entsprechenden Bezugszeichen bezeichnet. Das Ausgangssignal des Kennfeldes 210 gelangt über einen Verknüpfungspunkt 430, einen Verknüpfungspunkt 440 und einen Schalter 450 zu einem Integrierer 410. Das Ausgangssignal eines Luftmengenmessers 150 gelangt über ein Schaltmittel 425 zu einem Integrierer 400.

Die Ausgangssignale der beiden Integrierer 400 und 410 werden von einer Verarbeitung 420 ausgewertet, die dann die Fehleranzeige 250 ansteuert. Die Schaltmittel 425 und 450 werden von der Arbeitsbereichserkennung 200 angesteuert.

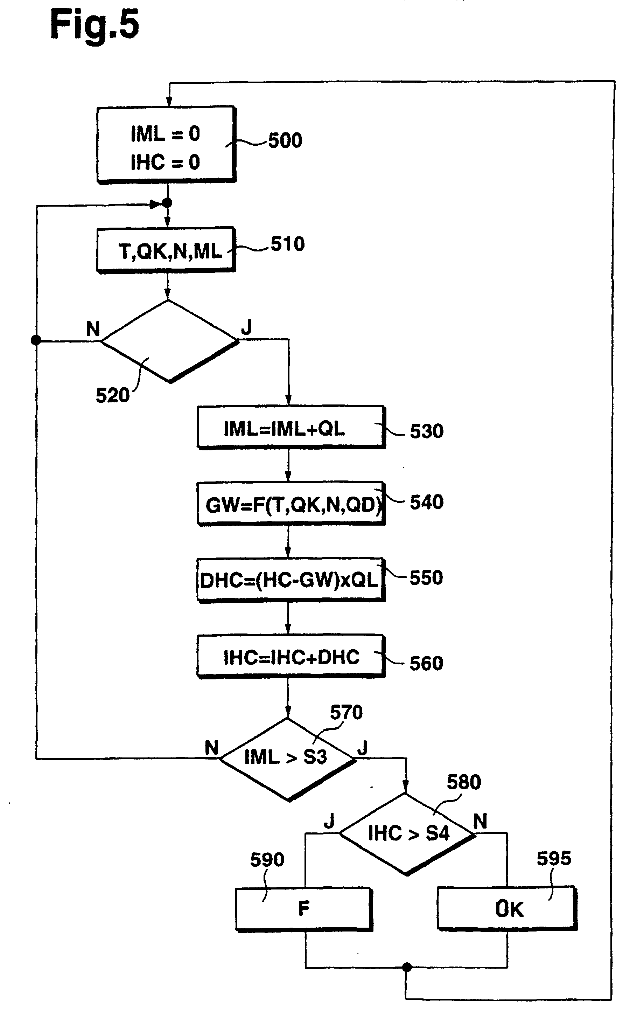

Die Funktionsweise Vorrichtung wird anhand des Flußdiagrammes gemäß Figur 5 beschrieben. In einem ersten Schritt 500 wird der Inhalt IML des Integrators 400 und der Inhalt IHC des Integrators 410 auf 0 gesetzt. Im Schritt 510 werden die verschiedenen Betriebskenngrößen erfaßt. Erkennt in der Abfrage 520 die Arbeitsbereichserkennung 200, daß ein bestimmter Betriebsbereich nicht vorliegt, so folgt erneut Schritt 510. Erkennt die Arbeitsbereichserkennung 200 im Schritt 520 jedoch, daß bestimmt Betriebsbereiche vorliegen, so werden die Schaltmittel 425 und 450 durchgesteuert, was zur folge hat, daß im Schritt 530 das Ausgangssignal QL im Integrierer 400 aufintegriert wird.

**Eine Überwachung erfolgt, wenn die Temperatur T eine Mindesttemperatur überschreitet, die eingespritzte Kraftstoffmenge QK und/oder die Dosiermenge QD einen Mindestwert überschreitet.**

Ferner wird im Schritt 540 von dem Kennfeld 210 der Grenzwert GW als Funktion der Abgastemperatur, der eingespritzten Kraftstoffmenge QK, der Drehzahl N und der Dosiermenge QD bestimmt.

Von Verknüpfungspunkt 430 wird die Differenz zwischen dem erfaßten Wert für die Kohlenwasserstoffkonzentration HC und dem Grenzwert GW gebildet. Im Verknüpfungspunkt 440 wird dieser Wert mit der Luftmenge QL multipliziert. Diese Berechnung erfolgt im Schritt 550. Anschließend integriert der Integrierer 410 im Schritt 560 diesen Wert DHC auf.

Die Verarbeitung 420 überprüft in der Abfrage 570, ob der Inhalt IML des Integrierers 400 einen Schwellwert S3 überschreitet. Ist dies nicht der Fall, so folgt erneut Schritt 510. Ist dies der Fall, so wird in der Abfrage 580 von der Verarbeitung 420 überprüft, ob der Inhalt IHC des Integrierers 410 einen Schwellwert S4 überschreitet. Ist dies der Fall, so wird in Schritt 590 auf Fehler erkannt, ist dies nicht der Fall, so erkennt die Bearbeitung 420 in Schritt 595 daß der Katalysator ordnungsgemäß arbeitet.

Bei dieser nicht erfindungsgemäßen Ausführungsform wird ausgehend von der Abgastemperatur, der Einspritzmenge und der Drehzahl erkannt, wann eine Überwachung stattfinden kann. In der Zeit, in der die Überwachung aktiv ist, wird der Luftmassenstrom im Integrator 400 aufsummiert. Von dem aktuellen gemessenen Kohlenwasserstoffwert HC wird ein Grenzwert GW abgezogen. Der 'Grenzwert wird über Kennfelder aus Abgastemperatur T, der Einspritzmenge QK, der Drehzahl N und der Dosiermenge QD gebildet. Diese Differenz zwischen gemessenen Kohlenwasserstoffwert HC und dem Grenzwert GW repräsentiert den Unterschied des Schadstoffgehaltes der Abgases gegenüber einem gut funktionierenden Katalysator. Die Differenz wird mit dem aktuellen Luftmassenstrom multipliziert. Man erhält somit den aktuellen Schadstoffmassenstrom. Während der Überwachungszeit wird dieser Schadstoffmassenstrom in einem Integrator aufsummiert. Die Verarbeitungslogik prüft ständig, ob die überwachte Luftmasse einen Mindestwert S3 erreicht. Ist dies der Fall, so wird überprüft ob die Schadstoffmasse IHC einen Maximalwert S4 überschritten hat. Ist dies der Fall, so wird der Fehler erkannt.

Je nach Ausgestaltung aller Ausführungsbeispiele wird der Test nur einmal nach dem Start des Fahrzeugs durchgeführt. Alternativ kann auch vorgesehen sein, daß der Test nach jedem Durchlauf von neuem beginnt.

Alternativ kann auch vorgesehen sein, daß die Abgastemperatur nicht unmittelbar gemessen wird, sondern aus verschiedenen Betriebsparametern über ein Temperaturmodell errechnet wird.

Durch die Zähler bzw. Integratoren wird die Überwachung sehr robust gegenüber kurzzeitigem Fehlverhalten des Katalysators. Das Testverfahren ist besonders geeignet um den Test auch bei unruhiger Fahrweise zuverlässig durchführen zu können.

## Patentansprüche

1. Verfahren zur Überwachung der Funktionsweise eines Katalysators, insbesondere eines oxidationskatalysators und/oder eines Reduktionskatalysators bei einer selbstzündenden Brennkraftmaschine, wobei ein Sensor vorgesehen ist, der ein Ausgangssignal erzeugt, das den Anteil von Kohlenwasserstoffen im Abgas anzeigt, **dadurch gekennzeichnet, daß** ausgehend von dem Ausgangssignal des Sensors eine Überprüfung des Katalysators erfolgt, wenn vorgebbare Betriebszustände vorliegen, in denen der Katalysator aktiv ist, wobei eine erste Zeitdauer, in der die vorgegebenen Betriebszustände vorliegen, und eine- zweite Zeitdauer, in der ein ordnungsgemäß arbeitender Katalysator anhand des Ausgangssignals des Sensors erkannt wird, erfaßt werden, und dass ein Fehler erkannt wird, wenn die erste und die zweite Zeitdauer um mehr als einen vorgegebenen Wert voneinander abweichen.

2. Verfahren nach Anspruch 1, **dadurch gekennzeichnet, daß** die vorgebbaren Betriebszustände, in denen eine Überprüfung erfolgt, abhängig von wenigstens der Drehzahl und der eingespritzten Kraftstoffmenge vorgebbar sind.

3. Verfahren nach einem der vorhergehenden Ansprüche, **dadurch gekennzeichnet, daß** ein ordnungsgemäßes Arbeiten des Katalysators erkannt wird, wenn der Anteil von Kohlenwasserstoffen im Abgas einen Schwellwert nicht überschreitet.

4. Verfahren nach einem der vorhergehenden Ansprüche, **dadurch gekennzeichnet, daß** der Schwellwert von wenigstens einer der Größen Abgastemperatur, Binspritzmenge, Drehzahl oder Dosiermenge abhängt.

5. Vorrichtung zur Überwachung der Funktionsweise eines Katalysators, insbesondere eines Oxidationakatalysators und/oder eines Reduktionskatalysators bei einer selbstzundenden Brennkraftmaschine, mit einem Sensor, der ein Ausgangssignal erzeugt, das den Anteil von Kohlenwasserstoffen im Abgas anzeigt, **dadurch gekennzeichnet, daß** Mittel vorgesehen sind, die ausgehend von dem Ausgangssignal des Sensors eine Überprüfung des Katalysators durchführen, wenn vorgebbare Betriebszustände vorliegen, in denen der Katalysator aktiv ist, wobei ein Zeitzähler (240) eine erste Zeitdauer, in der die vorgegebenen Betriebszustände vorliegen, und ein zweiter Zähler (235) eine zweite Zeitdauer, in der ein ordnungsgemäß arbeitender Katalysator anhand des Ausgangssignals des Sensors erkannt wird, zählen, und dass Mittel vorgesehen sind, die ein Fehler erkennen, wenn die erste und die zweite Zeitdauer um mehr als einen vorgegebenen Wert voneinander abweichen.

## Claims

1. Method for monitoring the operation of a catalytic converter, in particular of an oxidation catalytic converter and/or of a reduction catalytic converter in a compression-ignition internal combustion engine, in which a sensor is provided, which generates an output signal which indicates the proportion of hydrocarbons in the exhaust gas, **characterized in that**, working on the basis of the output signal from the sensor, the catalytic converter is checked when predeterminable operating states, in which the catalytic converter is active, prevail, a first time, during which the predetermined operating states are present, and a second time, during which a catalytic converter which is operating correctly is detected on the basis of the output signal from the sensor, being recorded, and a fault being detected if the first and second times differ from one another by more than a predetermined value.

2. Method according to Claim 1, **characterized in that** the predeterminable operating states in which a check is carried out can be predetermined as a function of at least the rotational speed and the injected quantity of fuel.

3. Method according to one of the preceding claims, **characterized in that** correct operation of the catalytic converter is detected if the proportion of hydrocarbons in the exhaust gas does not exceed a threshold value.

4. Method according to one of the preceding claims, **characterized in that** the threshold value is dependent on at least one of the parameters exhaust-gas temperature, injection quantity, rotational speed or metered quantity.

5. Device for monitoring the operation of a catalytic converter, in particular of an oxidation catalytic converter and/or of a reduction catalytic converter in a compression-ignition internal combustion engine, having a sensor which generates an output signal which indicates the proportion of hydrocarbons in the exhaust gas, **characterized in that** there are means which, on the basis of the output signal from the sensor, carry out a check on the catalytic converter when predeterminable operating states, in which the catalytic converter is active, are present, a time counter (240) counting a first time, during which the predetermined operating states are present, and a second counter (235) counting a second time, during which a catalytic converter which is operating correctly is detected on the basis of the output signal of the sensor, and **in that** there are means which detect a fault if the first and second times differ from one another by more than a predetermined value.

## Revendications

1. Procédé pour surveiller le fonctionnement d'un catalyseur notamment d'un catalyseur d'oxydation et/ou un catalyseur de réduction pour un moteur à combustion interne à allumage non commandé, avec un capteur générant un signal de sortie indiquant la teneur en hydrocarbures dans les gaz d'échappement,
**caractérisé en ce que**
partant du signal de sortie du capteur on vérifie le catalyseur pour des états de fonctionnement prédéterminés dans lesquels le catalyseur est actif,
on détecte une première durée au cours de laquelle existent les états de fonctionnement prédéterminés et une seconde durée au cours de laquelle on estime que le fonctionnement du catalyseur est correct à partir du signal de sortie du capteur, et
on estime qu'il y a un défaut si la première et la seconde durée diffèrent l'une de l'autre de plus d'une valeur prédéterminée.

2. Procédé selon la revendication 1,
**caractérisé en ce que**
les états de fonctionnement prédéterminés au cours desquels on effectue un contrôle sont prédéterminés en fonction d'au moins la vitesse de rotation et de la quantité de carburant injectée.

3. Procédé selon l'une quelconque des revendications précédentes,
**caractérisé en ce qu'**
on reconnaît un fonctionnement correct du catalyseur si la teneur en hydrocarbure dans les gaz d'échappement ne dépasse pas un seuil.

4. Procédé selon l'une quelconque des revendications précédentes,
**caractérisé en ce que**
le seuil dépend d'au moins l'une des grandeurs suivantes : température des gaz d'échappement, quantité de carburant injectée, vitesse de rotation (régime) ou quantité dosée.

5. Dispositif de surveillance du fonctionnement d'un catalyseur notamment d'un catalyseur d'oxydation et/ou d'un catalyseur de réduction dans un moteur à combustion interne à allumage non commandé, avec un capteur générant un signal de sortie indiquant la teneur en hydrocarbures contenus dans les gaz d'échappement,
**caractérisé par**
des moyens qui à partir du signal de sortie du capteur contrôlent le catalyseur lorsqu'existent des états de fonctionnement prédéterminés au cours desquels le catalyseur est actif, un compteur de temps (240) comptant une première durée au cours de laquelle existent les états de fonctionnement prédéterminés, et
un second compteur (235) compte une seconde durée au cours de laquelle on reconnaît un catalyseur fonctionnant correctement à l'aide du signal de sortie du capteur, et
des moyens qui constatent un défaut si la première et la seconde durée diffèrent l'une de l'autre de plus d'une valeur prédéterminée.
